# EUROPÄISCHE PATENTANMELDUNG

(11) **EP 1 092 754 A2**
(43) Veröffentlichungstag der Anmeldung: **18.04.2001**
(21) Anmeldenummer: 00120066.6
(22) Anmeldetag: 15.09.2000
(51) Int. Cl.: C09B 67/24

(54) **Farbstoffpräparation**

(30) Priorität: 14.10.1999 DE 19949543
(71) Anmelder: BASF AKTIENGESELLSCHAFT, 67056 Ludwigshafen (DE)
(72) Erfinder: Donie, Volker, 67269 Grünstadt (DE); Froschauer, Horst, 67112 Mutterstadt (DE)

(57) **Zusammenfassung**

Farbstoffpräparation bestehend aus
- 20-50 Gew.-%: des Farbstoffs C.I. (61200) Reactive Blue 19
- 50-80 Gew.-%: des Natriumsalz eines Naphthalinsulfonsäure-Formaldehydkondensats und
- 0-5 Gew.-%: üblichen Zusatzstoffen,
sowie deren Verwendung zum Färben nach dem Kaltverweilverfahren.

## Beschreibung

Die vorliegende Erfindung betrifft Farbstoffpräparation bestehend aus
- 20-50 Gew.-%: des Farbstoffs C.I. (61200) Reactive Blue 19
- 50-80 Gew.-%: des Natriumsalz eines Naphthalinsulfonsäure-Formaldehydkondensats
- 0-5 Gew.-%: üblichen Zusatzstoffen,
sowie deren Verwendung zum Färben nach dem Kaltverweilverfahren.

Dunkle brillante Blaunuancen sind von jeher als Textilfarbstoffe gefragt, da sie in breiten Bereichen Einsatz finden. Heutzutage werden in modernen Färbereien derartige Farben kontinuierlich gefärbt, was einen größeren Durchsatz ermöglicht. Eine weitere Entwicklung unserer Zeit ist, bedingt durch immer wieder neue Gewebe, der Wechsel zu niedrigeren Färbetemperaturen. Wurden noch vor einigen Jahren Reaktivfarbstoffe überwiegend in der Wärme nach dem Ausziehverfahren gefärbt, so ist inzwischen das Kaltverweilverfahren bei Raumtemperatur das Hauptfärbeverfahren, zumal die niedrigeren Badtemperaturen auch mit geringeren Energiekosten einhergehen.

Die EP-A-061 151 lehrt pulverförmige Farbstoffzubereitungen von faserreaktiven Farbstoffen mit Kondensationsprodukten von Dialkylnaphthalinsulfonsäure mit Formaldehyd.

Ferner beschreibt die EP-A-143 406 flüssige Präparationen von Reactive Blue 19 und Dispergiermitteln aus der Gruppe der Kondensationsprodukte von Formaldehyd mit Naphthalinsulfonsäure und Anthrachinonsulfonsäure.

Die DE-A-2 412 964 lehrt Farbstoffzubereitungen aus 30-65 Gew.-% C.I. Reactive Blue 19, Anthrachinon-2-sulfonsäure, einem Kondensationsprodukt von Naphthalinsulfonsäure mit Formaldehyd, einem kondensierten Phosphat und einem Entstaubungsmittel.

Der Farbstoff der Formel 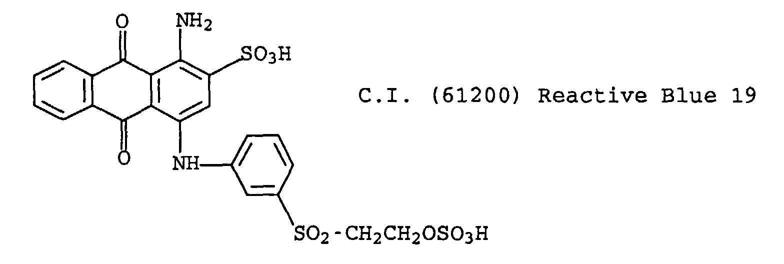 ist als Präparation mit 60-70 Gew.-% Farbstoff und Mengen bis zu 30-40 Gew.-% eines Natriumsalz eines Naphthalinsulfonsäureformaldehydkondensats im Handel erhältlich. Er wird im Alkalischen nach dem Kaltverweilverfahren kontinuierlich gefärbt. Färbt man große Metragen, so ist nach einiger Zeit selbst bei niedrigen Konzentrationen zu beobachten, daß im Färbebad an den Stellen, an denen die Stoffbahnen durchlaufen, er tixotrop wird und sogar ausfällt. Das Ergebnis sind ungleichmäßige fleckige Färbungen, die man sich durch Alterungsprozesse und Scherkräfte erklärt. Als direkte Folge dieses unerwünschten Effekts ist der Färber gezwungen, bei ca. 1000 m Stoffbahn den Färbevorgang zu unterbrechen und das Färbebad abzulassen.

Daher war es Aufgabe der vorliegenden Erfindung, eine Farbstoffpräparation zur Verfügung zu stellen, die eine deutlich höhere Färbeflottenstabilität aufweist.

Demgemäß wurde die obengenannte Färbepräparation gefunden.

Bevorzugt werden Farbstoffpräparationen bestehend aus
- 25-45 Gew.-%: des Farbstoffs C.I. (61200) Reactive Blue 19
- 55-75 Gew.-%: des Natriumsalz eines Naphthalinsulfonsäure-Formaldehydkondensats und
- 0-5 Gew.-%: üblichen Zusatzstoffen.

Insbesondere werden Farbstoffpräparationen bestehend aus
- 30-40 Gew.-%: des Farbstoffs C.I. (61200) Reactive Blue 19
- 60-70 Gew.-%: des Natriumsalz eines Naphthalinsulfonsäure-Formaldehydkondensats und
- 0-5 Gew.-%: üblichen Zusatzstoffen bevorzugt.

Das Natriumsalz eines Naphthalinsulfonsäure-Formaldehydkondensats ist ein Dispergiermittel, welches unter den Namen Setamol®WS (Herst. Firma BASF), Irgasol® (Herst. Firma Ciba) oder Tamol® (Herst. Firma BASF) erhältlich ist.

In Färbepräparationen übliche Zusatzstoffe sind Staubbindemittel, beispielsweise Polyalkylenglykole, Phosphatester, Fettsäuren und bevorzugt Staubbindemittel auf Basis einer Mineralölemulsion. Weitere Zusatzstoffe sind Puffersubstanzen wie Natriumacetat, Natriumdihydrogenphosphat und Natriumoxalat.

Ferner können anorganische Alkalisalze, wie Natriumchlorid und Natriumsulfat, die beispielsweise durch die Farbstoffsynthese anfallen in der Präparation enthalten sein.

Die erfindungsgemäßen Farbstoffpräparation lassen sich auf üblichem Weg durch mechanisches Vermischen der Einzelkomponenten beispielsweise in einer Trommel oder Mühle herstellen. Man kann das Naphthalinsulfonsäure-Formaldehydkondensat und die Zusatzstoffe dem Farbstoffpulver beimischen oder dem bei der Farbstoffsynthese erhältlichen feuchten Preßkuchen in fester Form oder als wäßrige Lösung zusetzen, vermischen und dieses Gemisch trocknen, z.B. sprühtrocknen oder granulieren.

Die Farbstoffpräparation zeichnen sich durch eine sehr hohe Flottenstabilität in alkalischen, wäßrigen Färbebädern und Klotzflotten aus und ermöglichen so das Färben von langen Stoffbahnen ohne Wechsel des Färbebades. Sie eignen sich zum Färben von Fasermaterial, das überwiegend natürlich oder regenerierte Cellulose oder natürliche oder synthetische Polyamide enthält. Vorzugsweise eignen sich die Präparationen zum Färben von Wolle und Baumwolle.

Die nachfolgenden Beispiele sollen die Erfindung näher erläuterin.

### Beispiel 1 (erfindungsgemäße Präparation)

Es wurden 30 g des Farbstoffpulvers Reactive Blue 19 (enthaltend 0,2 Gew.-% Staubbindemittel) und 70 g Tamol (Natriumsalz eines Naphthalinsulfonsäure-Formaldehydkondensats) in einer Mühle vermischt.

### Anwendungsbeispiel 1: Test der Flottenstabilität

5 g Farbstoffpräparation von Beispiel 1 wurden in 50 ml destilliertem Wasser gelöst und die Lösung mit 0,2 g Primasol® (Netzmittel, Herst. BASF), 9,5 ml Natriumwasserglas (38° Baumé), 3 ml Natronlauge (38° Baumé) versetzt. Die Lösung wurde mit dest. Wasser auf 100 ml Gesamtvolumen aufgefüllt. Die Mischung wurde 1 Minuten gerührt und anschließend zwischen die Walzen eines horizontalen Laborfoulards gegeben.

Direkt im Anschluß wurde die Mischung auf ein Baumwollgewebe (10 cm Breite, 50 cm Länge) geklotzt. Der Stoffstreifen wurde eingerollt und 16 h bei 25°C einwirken gelassen. Danach wurde er mit Wasser ausgewaschen und geseift.

In 15 Minutenabständen (also nach 15, 30 und 45 Minuten vom 1. Streifen) wurde die Farbstoffmischung auf 3 weiteren Baumwollstreifen nach dem Klotz/Verweilverfahren appliziert und diese ebenfalls 16 h bei 25°C gefärbt, gewaschen und geseift.

Alle Gewebestreifen waren gleichmäßig, fleckenlos gefärbt.

### Beispiel 2 (Vergleichspräparation)

Es wurden 70 g des Farbstoffpulvers Reactive Blue 19 (enthaltend 0,2 Gew.-% Staubbindemittel) und 25 g Tamol (Natriumsalz eines Naphthalinsulfonsäure-Formaldehydkondensats) in einer Mühle vermischt.

### Anwendungsbeispiel 2:

Mit 6 g Farbstoffpräparation von Beispiel 2 wurde analog zu Anwendungsbeispiel 1 eine Färbeflotte hergestellt und zwischen die Walzen eines horizontalen Laborfoulards gegeben.

Analog zu Anwendungsbeispiel 1 wurde die Mischung auf Baumwollstreifen geklotzt, einwirken gelassen und die Stoffstreifen ausgewaschen und geseift. Ab dem 2. Gewebestreifen waren die Streifen fleckig gefärbt.

## Patentansprüche

1. Farbstoffpräparation bestehend aus
20-50 Gew.-% des Farbstoffs C.I. (61200) Reactive Blue 19
50-80 Gew.-% des Natriumsalz eines Naphthalinsulfonsäure-Formaldehydkondensats und
0-5 Gew.-% üblichen Zusatzstoffen.

2. Farbstoffpräparation nach Anspruch 1 bestehend aus
25-45 Gew.-% des Farbstoffs C.I. (61200) Reactive Blue 19
55-75 Gew.-% des Natriumsalz eines Naphthalinsulfonsäure-Formaldehydkondensats und
0-5 Gew.-% üblichen Zusatzstoffen.

3. Verwendung der Farbstoffpräparation nach Anspruch 1 oder 2 zum Färben von natürlicher oder regenerierter Cellulose oder natürlichem oder synthetischem Polyamid.

4. Verwendung der Farbstoffpräparation nach Anspruch 1 oder 2 zum Färben nach dem Kaltverweilverfahren.
